Europäisches Patentamt

European Patent Office

Office européen des brevets

(19)

(11) Veröffentlichungsnummer: **0 001 573**
**B1**

(12) ## EUROPÄISCHE PATENTSCHRIFT

(45) Veröffentlichungstag der Patentschrift:
14.01.81

(51) Int. Cl.³: **B 21 F 27/10, B 23 K 11/00**

(21) Anmeldenummer: 78101026.9

(22) Anmeldetag: 29.09.78

(54) Verfahren und Vorrichtung zum Anschweissen von Randstäben an Gitterroste.

(30) Priorität: 19.10.77 DE 2746866

(43) Veröffentlichungstag der Anmeldung:
02.05.79 Patentblatt 79/9

(45) Bekanntmachung des Hinweises auf die Patenterteilung:
14.01.81 Patentblatt 81/2

(84) Benannte Vertragsstaaten:
BE CH FR GB NL SE

(56) Entgegenhaltungen:
FR-A-1 587 159
FR-A-2 222 164
FR-A-2 248 110

(73) Patentinhaber: Lichtgitter-Gesellschaft mbH,
Kreuzstrasse 26-30, D-4424 Stadtlohn (DE)

(72) Erfinder: Martin, Hans, Dr., Arfkamp 14, D-4424 Stadtlohn
(DE)
Erfinder: Herbst, Wilhelm, Vockengraben 30,
D-4424 Stadtlohn (DE)

(74) Vertreter: Habbel, Hans-Georg, Dipl.-Ing.,
Postfach 3429 Am Kanonengraben 11, D-4400 Münster
(DE)

## Verfahren und Vorrichtung zum Anschweißen von Randstäben an Gitterroste

Die Erfindung bezieht sich auf ein Verfahren zum Anschweißen von Randstäben an die Stabenden von mittels Anschlägen ausgerichteten und durch Halteeinrichtungen festgelegten aus Stäben bestehenden Gitterrosten, wozu die randstablosen Gitterroste auf einer Transporteinrichtung einer Arbeitsstelle zugeführt werden sowie eine Vorrichtung zur Durchführung eines solchen Verfahrens.

Eine Einrichtung zur Durchführung eines Verfahrens gemäß dem Oberbegriff wird in der FR-A-2 222 164 beschrieben. Soll ein Gitterrost an allen vier Seiten mit einem sogenannten Randstab ausgerüstet werden, beispielsweise um dadurch entsprechenden Festigkeitsforderungen zu entsprechen oder weil die Randstäbe mit besonderen Vorrichtungen zum Verbinden einzelner Gitterroste untereinander ausgerüstet sind, ist es bei der bekannten Vorrichtung erforderlich, den Gitterrost viermal zu drehen, um derart an allen vier Seiten den erforderlichen Randstab einzuführen. Das bekannte Verfahren ist daher relativ zeit- und somit kostenaufwendig.

Die gleichen Überlegungen gelten für das Verfahren, so wie es in der DE-AS 1 565 688 beschrieben wird.

Der Erfindung liegt die Aufgabe zugrunde, ein Verfahren zum Anschweißen der Randstäbe zu schaffen, das in eine kontinuierliche Förderbahn eingebaut werden kann, in welchem das Herstellen der Gitterroste erfolgt, so daß in dieser kontinuierlichen Herstellungsstraße für Gitterroste auch kontinuierlich das Anschweißen der Randstäbe vorgenommen werden kann.

Diese der Erfindung zugrunde liegende Aufgabe wird im wesentlichen dadurch gelöst, daß je ein Gitterrost beiderseits der Arbeitsstelle angehalten wird, Randstäbe in eine höhenmäßig und in Förderrichtung der Gitterroste ausgerichtete Lage geführt, weiters die Gitterroste zur Anlage an die Randstäbe und an einen ortsfesten, sich in Förderrichtung erstreckenden Anschlag geführt werden und anschließend die Verschweißung der Stäbe der Gitterroste mit den Randstäben und der Weitertransport der Gitterroste erfolgt.

Hierdurch wird erreicht, daß zwei Gitterroste an zwei Randstäbe angepreßt und bei diesem Anpreßvorgang gleichzeitig ausgerichtet, worauf die Schweißung durchgeführt wird, wobei dann der Weitertransport der Gitterroste erfolgen kann, derart, daß nunmehr in diesem weiteren Transportweg die Roste gedreht und die seitlichen Randstäbe angeschweißt werden.

Hierdurch wird also ein kontinuierliches Arbeitsverfahren geschaffen, bei welchem in einer Schweißstelle gleichzeitig zwei Stäbe an zwei verschiedenen Rosten angeschweißt werden, d. h. mit einer Schweiß- und Hubvorrichtung werden gleichzeitig zwei Gitterroste bedient, ohne daß hierzu Bedienungspersonen erforderlich sind, denn das Einfahren der Gitterroste in die Arbeitsstelle und die verschiedenen Arbeitstakte, wie Anheben der Randstäbe, Absenken der Schweißeinrichtungen usw. kann automatisch dadurch erfolgen, daß die einlaufenden Gitterroste selbst über entsprechende Endschalter die Auslösevorrichtungen für diese Einrichtungen bedienen.

In den Unteransprüchen sind vorteilhafte Ausgestaltungen der erfindungsgemäßen Anlage definiert.

Die Vorrichtung zur Durchführung des erfindungsgemäßen Verfahrens kennzeichnet sich im wesentlichen durch zwei Rollenbahnabschnitte beiderseits der Arbeitsstelle, eine die beiden Randstäbe aufnehmende Hubvorrichtung und in den Bereich der Arbeitsstelle ein- und ausfahrbare Rollen, die dann zur Wirkung kommen, wenn der Schweißvorgang für die Randstäbe durchgeführt ist und der Weitertransport der Gitterroste erfolgt.

Ein Ausführungsbeispiel der Erfindung wird nachfolgend anhand der Zeichnung erläutert. Die Zeichnung zeigt dabei in

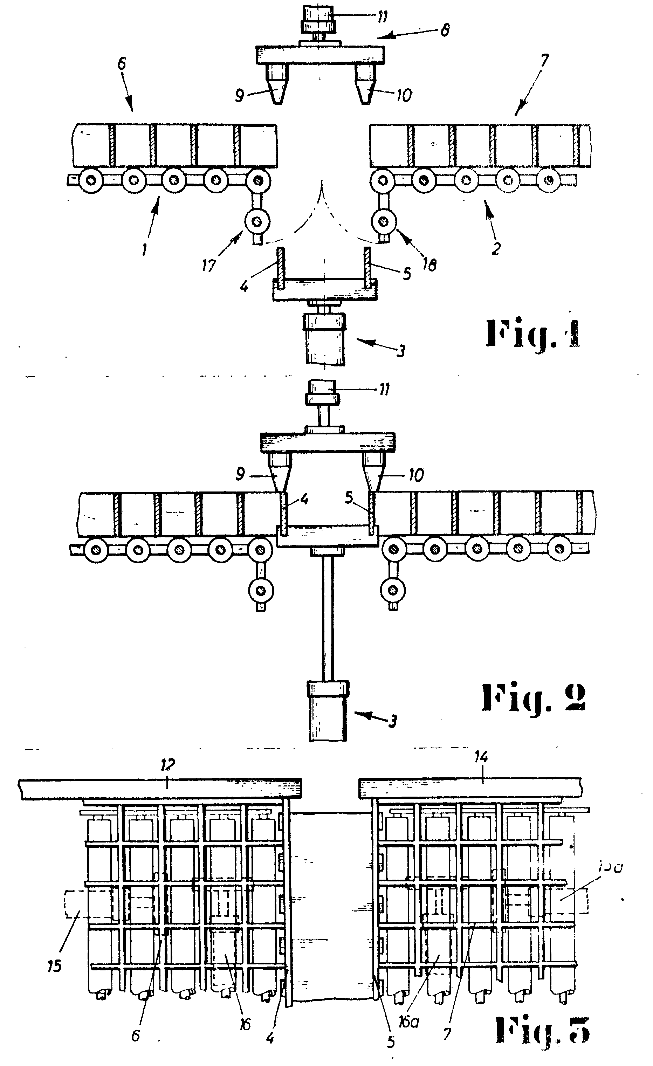

Fig. 1 eine schematische Seitenansicht einer erfindungsgemäß ausgebildeten Vorrichtung, in

Fig. 2 eine Ansicht gemäß Fig. 1 in einem anderen Verfahrensstadium und in

Fig. 3 eine Draufsicht auf die erfindungsgemäße Vorrichtung.

In der Zeichnung sind mit 1 und 2 zwei Rollenbahnen bezeichnet, die wenigstens teilweise angetriebene Rollen aufweisen und beiderseits einer Arbeitsstelle angeordnet sind. Diese Arbeitsstelle besteht im wesentlichen aus einer Hubvorrichtung 3 für Randstäbe 4 und 5, die auf dieser Hubvorrichtung hochkant aufgestellt lagerbar sind. Die Hubvorrichtung kann die Randstäbe 4 und 5 nunmehr in eine Höhe führen, daß sie genau ausgerichtet mit auf den Rollenbahnen 1 und 2 aufliegenden Gitterrosten 6 und 7 sind.

Oberhalb der Hubvorrichtung 3 ist eine Schweißeinrichtung 8 angeordnet, die beispielsweise zwei Schweißpistolen 9 und 10 trägt. Diese Schweißeinrichtung 8 ist ebenfalls über eine entsprechende Hubvorrichtung 11 heb- und senkbar und kann damit in den eigentlichen Arbeitsbereich abgesenkt oder in eine nicht störende Ruhelage angehoben werden.

Wie aus Fig. 3 erkennbar ist, ist in Längsrichtung der Rollenbahnen 1 und 2 ausgerichtet und angeordnet je ein Anschlag 12 und 14 vorgesehen. In dem Bereich vor der eigentlichen Arbeitsstelle und hinter der eigentlichen Arbeitsstelle sind Hydraulikzylinder 15 und 16 bzw. 15a und 16a angeordnet, die, wenn ein Gitterrost 6 bzw. 7 in den Bereich vor der Arbeitsstelle eingerollt ist, diesen Gitterrost nunmehr zur Anlage an den Anschlag 12 bzw. 14 bringen. Gleichzeitig wird dieser Gitterrost aber auch zur Anlage an den in die Arbeitsstellung angehobenen Randstab geführt.

Zu diesem Verfahrenszeitpunkt liegen also die Gitterroste 6 und 7 sowohl an den Anschlägen 12 und 14 wie an den Randstäben 4 und 5 an und sind damit automatisch ausgerichtet und weisen den erforderlichen Anpreßdruck für die nachfolgend durchzuführende Verschweißung am Randstab auf.

Anschließend an dieses Arbeitsstadium senkt sich nunmehr die Schweißvorrichtung 8 ab und führt die Schweißung durch, wobei die Schweißvorrichtung, wie dies an sich bekannt ist, quer zur Förderrichtung der Gitterroste 6 und 7 über die Stäbe verfahren werden kann und dabei nunmehr die einzelnen Füll- oder Tragstabenden mit den Randstäben verschweißt.

Sobald die Schweißeinrichtung ihre Endposition erreicht hat, kann automatisch gesteuert ein Anheben der Schweißeinrichtung und ein Absenken der Hubvorrichtung 3 erfolgen. Nunmehr wird der entstehende Zwischenraum zwischen den Rollenbahnen 1 und 2 durch die in diesem Bereich einschwenkbaren Rollen 17 und 18 geschlossen und nunmehr erfolgt ein Weitertransport der Gitterroste 6 und 7 derart, daß der Gitterrost 6 in die Lage kommt, in der der Gitterrost 7 in der Zeichnung dargestellt ist. Nunmehr kann ein neues Arbeitsspiel erfolgen, d. h. daß an die rückwärtige Kante des Gitterrostes 6 nunmehr ein Randstab 5 angeschweißt wird.

Es ist aus der Darstellung und aus der voraufgehenden Beschreibung ohne weiteres ersichtlich, daß durch das erfindungsgemäße Verfahren und die hierfür geeignete Vorrichtung ein automatisches Anschweißen von Randstäben an Gitterrosten erfolgt, und zwar werden gleichzeitig zwei Randstäbe an zwei Gitterrosten angeschweißt und es ist möglich, diese Arbeitsstation in ein kontinuierliches Arbeitsverfahren einzuschalten, da das Ausrichten und Einrichten der Roste für die Durchführung der Schweißung automatisch durch die Hydraulikzylinder 15 und 16 erfolgt. Hierbei ist es natürlich auch möglich, daß nur ein Hydraulikzylinder vorgesehen wird, der diagonal ausgerichtet ist und für die notwendige Verschiebung des Rostes auf der Rollenbahn Sorge trägt.

An dieser Stelle sei darauf hingewiesen, daß es natürlich auch möglich ist, daß die Randstäbe 4 und 5 nach außen geführt werden können und damit zur Anlage an die Gitterroste gebracht werden und nicht die Gitterroste zur Anlage an die Randstäbe.

Weiterhin ist ein wesentlicher Vorteil des erfindungsgemäßen Verfahrens darin zu sehen, daß der Bedienungsmann der Vorrichtung mit der Handhabung und Ausrichtung der Roste nichts mehr zu tun hat, sondern die Roste werden automatisch über die Rollenbahnen herangeführt und automatisch positioniert, so daß die Bedienungsperson lediglich die maschinellen Einrichtungen überwachen muß.

Schließlich ist es möglich, daß mit dieser Einrichtung auch nur ein einziger Randstab angeschweißt wird, so daß die Maschine nicht auf die doppelte Ausführungsform beschränkt ist und es ist möglich, unterschiedliche Randstäbe 4 bzw. 5 in einem Arbeitsgang an die Roste anzuschweißen, so daß beispielsweise an der Frontseite eines Rostes ein anderer Randstab als an der Rückseite eines Rostes vorgesehen ist.

## Patentansprüche

1. Verfahren zum Anschweißen von Randstäben (4, 5) an die Stabenden von mittels Anschlägen (12, 14) ausgerichteten und durch Halteeinrichtungen festgelegten aus Stäben bestehenden Gitterrosten, wozu die randstablosen Gitterroste (6, 7) auf einer Transporteinrichtung einer Arbeitsstelle zugeführt werden, dadurch gekennzeichnet, daß je ein Gitterrost (6, 7) beiderseits der Arbeitsstelle angehalten wird, Randstäbe (4, 5) in eine höhenmäßig und in Förderrichtung der Gitterroste (6, 7) ausgerichtete Lage geführt, weiters die Gitterroste zur Anlage an die Randstäbe (4, 5) und an einen ortsfesten, sich in Förderrichtung erstreckenden Anschlag (12, 14) geführt werden und anschließend die Verschweißung der Stäbe der Gitterroste mit den Randstäben und der Weitertransport der Gitterroste erfolgt.

2. Verfahren nach Anspruch 1, dadurch gekennzeichnet, daß die Transporteinrichtung im Bereich der Arbeitsstelle für die Randstäbe (4, 5) raumschaffend unterbrechbar ist.

3. Verfahren nach Anspruch 1 und 2, dadurch gekennzeichnet, daß die Randstäbe (4, 5) in ihre Schweißstellung gehoben werden.

4. Verfahren nach Anspruch 1 bis 3, dadurch gekennzeichnet, daß die Halteeinrichtungen als Schubvorrichtungen ausgebildet sind, die auf der Transporteinrichtung verschiebbaren Gitterroste diagonal zur Anlage an den Randstäben und Anschlägen führen.

5. Verfahren nach Anspruch 1 bis 4, dadurch gekennzeichnet, daß der Ablauf der einzelnen Arbeitsvorgänge automatisch erfolgt.

6. Vorrichtung zum Durchführen des Verfahrens nach Anspruch 1 bis 5, gekennzeichnet durch zwei Rollenbahnabschnitte (1, 2) beiderseits der Arbeitsstelle, eine die beiden Randstäbe (4, 5) aufnehmende Hubvorrichtung (3) und in den Bereich der Arbeitsstelle ein- und ausfahrbare Rollen (17, 18).

7. Vorrichtung nach Anspruch 6, dadurch gekennzeichnet, daß die Schweißeinrichtung (8) und die die Randstäbe (4, 5) tragende Vorrichtung heb- und senkbar im Bereich zwischen den beiden Rollenbahnabschnitten (1, 2) angeordnet ist.

## Claims

1. Process for the attachment, by welding, of edge bars (4, 5) to the ends of bars of grids, consisting of bars, the grids being aligned by means of stops (12, 14) and being positionally fixed by holding devices, wherein the grids (6, 7), without edge bars, are fed, on a transport installation, to a working position, characterised in that one grid (6, 7) is, in each case, brought to rest at each side of the working position, edge bars (4, 5) are guided into a position of alignment with respect to height and in the transport direction of the grids (6, 7), the grids are guided into contact against the edge bars (4, 5) and against a stationary stop (12, 14), extending in the transport direction, the bars of the grids are then welded to the edge bars and the grids are transported onwards.

2. Process according to Claim 1, characterised in that, in order to create space for the edge bars (4, 5), the transport installation can be interrupted in the region of the working position.

3. Process according to Claim 1 and 2, characterised in that the edge bars (4, 5) are raised into their welding position.

4. Process according to Claim 1 to 3, characterised in that the holding devices are designed as pushing devices, guiding the grids, which can be moved upon the transport installation by pushing, diagonally into contact against the edge bars and stops.

5. Process according to Claim 1 to 4, characterised in that the course of the individual work operations takes place automatically.

6. Device for carrying out the process according to Claim 1 to 5, characterised by two sections of roller conveyor (1, 2), on both sides of the working position, a lifting device (3), receiving the two edge bars (4, 5), and rollers (17, 18), which can be retracted and lowered, into the region of the working position.

7. Device according to Claim 6, characterised in that the welding installation (8) and the device carrying the edge bars (4, 5) is arranged in the region between the two sections of roller conveyor (1, 2), in a manner allowing raising and lowering.

## Revendications

1. Procédé pour souder des barreaux marginaux (4, 5) à l'extrémité des barreaux de grilles formées de barreaux, alignées au moyen de butées (12, 14) et immocilisées par des dispositifs de retenue, les grilles (6, 7) dépourvues de barreaux marginaux étant amenées à cet effet sur un transporteur à un poste de travail, caractérisé par le fait que l'on arrête des grilles respectives (6, 7) de part et d'autre du poste de travail, que l'on conduit des barreaux marginaux (4, 5) à une position alignée den hauteur et dans la direction de transport des grilles (6, 7), que l'on amène les grilles à s'appliquer contre les barreaux marginaux (4, 5) et contre une butée à position fixe (12, 14) s'étendant dans la direction de transport et qu'ensuite, on effectue le soudage des barreaux des grilles aux marginaux et l'acheminement des grilles.

2. Procédé selon la revendication 1, caractérisé par le fait que le transporteur peut être interrompu, de manière à ménager de la place, dans la région du poste de travail destiné aux barreaux marginaux (4, 5).

3. Procédé selon les revendications 1 et 2, caractérisé par le fait que l'on soulève les barreaux marginaux (4, 5) à leur position de soudage.

4. Procédé selon les revendications 1 à 3, caractérisé par le fait que les dispositifs de retenue sont sous la forme d'appareils de poussée qui conduisent diagonalement des grilles, pouvant coulisser sur le transporteur, à s'appliquer contre les barreaux marginaux et les butées.

5. Procédé selon les revendications 1 à 4, caractérisé par le fait que le déroulement des différents processus de travail s'effectue automatiquement.

6. Appareil pour la mise en œvre du procédé selon les revendications 1 à 5, caractérisé par deux tronçons de transporteur à rouleaux (1, 2) de part et d'autre du poste de travail, un appareil de levage (3) recevant les deux barreaux marginaux (4, 5) et des rouleaux (17, 18) pouvant être amenés dans la région du poste de travail et en être retirés.

7. Appareil selon la revendication 6, caractérisé par le fait que le dispositif de soudage (8) et l'appareil portant les barreaux marginaux (4, 5) sont disposés de manière à pouvoir se lever et s'abaisser dans la région comprise entre les deux tronçons de transporteur à rouleaux (1, 2).

**Fig. 1**

**Fig. 2**

**Fig. 5**